# EUROPEAN PATENT SPECIFICATION

(11) **EP 2 007 158 B1**
(45) Date of publication and mention of the grant of the patent: **22.12.2010**
(21) Application number: 06805060.8
(22) Date of filing: 25.10.2006
(51) Int. Cl.: H04W 76/02, H04W 4/06, H04W 92/14

(54) **Method, mobile switching center, base station controller and system for processing a call service message associated with multiple cells within a range of a base station controller**
Verfahren, Mobilvermittlungsstelle, Basisstation-Steuereinrichtung und System zum Verarbeiten einer Anrufdienstnachricht in Zusammenhang mit mehreren Zellen in Reichweite einer Basisstation-Steuereinrichtung
Procédé, centre de commutation mobile, contrôleur d'une station de base et système de traitement d'un message de service d'appel associé avec plusieurs cellules dans la portée d'un contrôleur d'une station de base

(30) Priority: 13.04.2006 CN 200610025700
(43) Date of publication of application: 24.12.2008
(73) Proprietor: Huawei Technologies Co., Ltd., Longgang District, Shenzhen Guangdong 518129 (CN)
(72) Inventor: SHEN, Minjun, Guangdong 518129 (CN)
(74) Representative: Hengelhaupt, Jürgen
(86) International application number: PCT/CN2006/002855
(87) International publication number: WO 2007/118375

(56) References cited:
- EP-A2- 0 833 531
- WO-A1-94/14289
- WO-A2-00/38439
- CN-A- 1 625 293
- DE-A1- 19 620 035
- GB-A- 2 322 767
- US-A1- 2003 119 540
- "3rd Generation Partnership Project; Technical Specification Group Core Network and Terminals; Voice Group Call Service (VGCS); Stage 2 (Release 7)" 3GPP STANDARD; 3GPP TS 43.068, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V7.3.1, 1 April 2006 (2006-04-01), pages 1-130, XP050378230

## Description

### FIELD OF THE INVENTION

The present invention relates to mobile communications filed, more particularly, to methods, systems and devices for processing call service messages.

### BACKGROUND

Global System for Mobile Communications for Railway (GSM-R, GSM-R for Railway) is a railway specific mobile communications system constructed by adding Trunking communication functions upon the Global System for Mobile Communication (GSM), wherein the added Trunking functions mainly include the Advanced Speech Call Items (ASCIs) defined by the 3rd Generation Partnership Project (3GPP) Standard. The ASCIs mainly include three specific basic services of mobile communications: Voice Group Call Service (VGCS), Voice Broadcast Service (VBS), and Enhanced Multi-Level Precedence and Pre-emption (eMLPP).

VGCS service is a point-to-point voice communications manner participated by a plurality of parties, parts of the parties may talk while the others are listening. Members of two identities may be included in this service: a number of dispatchers and unlimited number of service subscribers. The dispatchers may be fixed network subscribers or mobile subscribers who participate into the group call voice communications via the dedicated channel established for them by the network; the service subscribers are mobile subscribers who have subscribed the VGCS services, wherein the called service subscribers participate into the group call voice communications via the group call channels in the group call area. During the call establishment, the system provides standard bi-directional channels for the placing service subscribers and the dispatchers, and assigns downlinks of the same service channel to all the called service subscribers to listen.

A particular VGCS service communication is uniquely determined by Group Identification (Group ID) and group call area, wherein the Group ID and the group call areatogether are referred to group call reference. The Group ID identifies member identities of the group. A service subscriber may subscribe a plurality of group IDs simultaneously and set different priority levels for them. The group call area ID is generally determined and configured in the system by the operator, referring to the geographical range covered by the VGCS service communications, such as including one or more cellular cells. There is a group call channel in each associated cell during calling, wherein the uplink may be used only by the current speaker camping in the cell, and all the listeners are waiting on the downlinks. Notification messages related to the group call are broadcasted over the Notification Channel (NCH). A service subscriber may dial the group ID subscribed to call all service subscribers who have subscribed this group ID in the group call area. Once a service subscriber within the group call area receives the group call notification message, the subscriber may join the call if it is a member of this group; otherwise a subscriber ignores the group call notification message if it is not a member of this group. During the group calling, any members of the group outside the group call area would also receive the group call notification message when entering the group call area, and may join the call.

The cells included in the group call area may belong to a same mobile switching center (MSC), or belong to different MSCs. If a call involves multiple MSCs, then one MSC thereof will manage the group call, referred to as Anchor MSC, while the remaining MSCs are Relay MSC. The Anchor MSC establishes all the connections, including connections to specified cells within the present MSC, to associated Relay MSC and dispatchers, and completes the voice distribution via a conference bridge. Only one link is required to be established between the Anchor MSC and a Relay MSC. A Relay MSC is responsible for the down voice distributions to the cells associated thereof

VBS service has a similar operating flow and functions as the VGCS service, with the major differences of: during the VBS service broadcast, only the broadcast initiator can speak, while the other service subscribers are always in a receiving state without any right to speak. The dispatcher,has no right to speak either if it is not the broadcast initiator. The speaking subscriber does not need to push the PTT button.

When the group call is established, the MSC needs to inform the base station controller (BSC) that which cells within the group call area belong to this BSC. If the group call involves multiple BSCs, then the MSC needs to inform the multiple BSCs respectively. Take the cellular mobile communications system as an example, the communication connection control function between the MSC and the BSC is completed by the A-interface which employs the Signaling Connection Control Part (SCCP) of the No.7 signaling system. In the case that the group call shares the A-interface signaling link, then when the group call is established, the MSC sends to the BSC a VGCS assignment request message including a Cell Identifier List element that specifically carries identifier information of the various cells within the BSC belonging to the group call area. Currently, any cell identifier information used by the MSC to inform the BSC employs the Cell Global Identification (MCC), which includes four parts of information: Mobile Country Code (MCC) + Mobile Network Code (MNC) + Location Area Code (LAC) + Cell Identity (CI). The fist three parts "MCC + MNC + LAC" of the CGI code are also called Location Area Identification (LAI). With respect to the current standard, MCC is 3-bit, e.g., 460 in China; MNC is 2-bit, e.g., 00; LAC is 2-byte 16 hexadecimal BCD code; and CI is 2-byte BCD code assigned by the MSC to which each cell belongs.

For example, a group call area includes (n + k) cells in the BSC, then the MSC will carry (n + k) CGIs by the cell identifier list element in the VGCS assignment message, and each CGI has a length of "MCC + MNC + LAC + CI". As can be seen, if the VGCS area includes many cells associated with the BSC, then the VGCS assignment request message will have a length being too long and thereby occupying much A-interface signaling resources.

Additionally, if the length of the VGCS assignment request message reaches a threshold provided by the criterion and there are still cell identifiers to be informed to the BSC, then the MSC needs to further send one or more VGCS area cell information messages to inform the BSC the remaining cell identifiers of the BSC that are not included in the VGCS assignment request message. A VGCS area cell information message also includes a cell identifier list element or a similar element carrying the CGI of each cell that needs to be identified. The length of each VGCS area cell information message is limited. When there are too many cell identifiers that need to identify the BSC by VGCS area cell information messages, the MSC may sends multiple VGCS area cell information messages to the BSC, thereby occupying more the A-interface signaling resources.
WO 00/38439 A2 discloses systems and methods to assist a handover, or cell change, of a Mobile Station (MS) participating in a group call. The information identifying the cell(s) in the GCA is useable by the MSC and/or BSC to provide parameters associated with the second cell to an MS participating in the group call, whereby the MS can perform a cell change operation when moving from the first cell to the second cell. The parameters associated with the second cell, and can be broadcast to the MS on a control channel associated with the group call channel in the first cell.
EP 0833531 A2 discloses a system handling group calls directed to a group of subscribers. The system has a broadcast sub-system (BSS) for carrying out transmission and control functions for communication connections from and to mobile stations. The system also includes a switching sub-system (SSS) which has mobile switch contacts for carrying out mobile radio specific switching functions, and databases for managing subscriber data and data for call handling.
DE 19620035 A1 discloses that permanent routing numbers (PRN, PRN') are reserved at the time of introduction of group calls for mobile service centres (AMSC, RMSC) serving the cells of group call service areas. These numbers identify the service area from which group calls can be routed directly to a mobile service centre or to those which administer and control the area concerned with the call. The parameters required for link establishment are made available from an internal group call register (GCR) for connecting the call to subscribers in the called group via radio equipment in the appropriate cells.
"3rd Generation Partnership Project; Technical Specification Group Core Network and Terminals; Voice Group Call Service (VGCS); Stage 2 (Release 7)" (3GPP STANDARD; 3GPP TS 43.068, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, no. V7.3.1, 1 April 2006, pages 1-130, XP050378230) specifies the stage two description the Voice Group Call Service (VGCS) which allows speech conversation of a predefined group of service subscribers in half duplex mode on the radio link taking into account multiple subscribers involved in the group call per cell.
GB 2322767 A disclose a method of transmitting call information including transmitting, within a first cell 105, call information relating to a call taking place within the first cell 105 and transmitting, within a second cell 103, the call information relating to the call taking place within the first cell 105.

### SUMMARY

The primary purpose of an embodiment of the present invention is to provide a method, system and device for processing call service messages, thereby saving the A-interface signaling resources between MSC and BSC.

An embodiment of the present invention provides a method for processing call service messages, wherein the call service is associated with service channels of multiple cells within a range of a base station controller. A mobile switching center sends a call service message to a base station controller, wherein the call service message includes a representative identifier identifying a set of cells associated with a call service within the base station controller. The base station controller performs call service operations specified by the message in each cell of the set according to indication of the representative identifier in the call service message, wherein the representative identifier comprises a cell identification discriminator field and an identification field, wherein content in the cell identification discriminator field represents a type of the identification, and the identification field comprises at least one corresponding identification, and the type of the representative identifier comprises: identifying a set of all cells having a same location area identification within the base station controller, or identifying a set of all cells having a same location area code within the base station controller; or identifying a set of all cells having a same mobile country code and a same mobile network code within the base station controller; or identifying a set of all cells within the base station controller.

An embodiment of the present invention further provides a mobile switching center including a call service message configuration unit and a message transmitting unit. The call service message configuration unit is used to configure a call service message in accordance with the cell range associated with the call service within the base station controller. Since the call service is associated with service channels of multiple cells within a range of a base station controller, the call service message includes a representative identifier identifying a set of cells associated with the call service within the base station controller. The message transmitting unit is used to send the configured call service message to the base station controller, wherein the representative identifier comprises a cell identification discriminator field and an identification field, wherein content in the cell identification discriminator field represents a type of the identification, and the identification field comprises at least one corresponding identification, and the type of the representative identifier comprises: identifying a set of all cells having a same location area identification within the base station controller; or identifying a set of all cells having a same location area code within the base station controller; or identifying a set of all cells having a same mobile country code and a same mobile network code within the base station controller; or identifying a set of all cells within the base station controller.
An embodiment of the present invention further provides a base station controller comprising a message receiving unit and a call service message processing unit , wherein the message receiving unit (421) is adapted to receive a call service message from a mobile switching center; and the call service message processing unit (422) is adapted to perform a call service operation specified by the message in each cell of the set according to the indication of the representative identifier in the call service message, and the call service is associated with service channels of multiple cells within a range of a base station controller, wherein the representative identifier comprises a cell identification discriminator field and an identification field, wherein content in the cell identification discriminator field represents a type of the identification, and the identification field comprises at least one corresponding identification, and the type of the representative identifier comprises: identifying a set of all cells having a same location area identification within the base station controller; or identifying a set of all cells having a same location area code within the base station controller; or identifying a set of all cells having a same mobile country code and a same mobile network code within the base station controller; or identifying a set of all cells within the base station controller.

An embodiment of the present invention further provides a system for processing call service message, including the above-mentioned mobile switching center and the above-mentioned base station controller.

When the mobile switching center of an embodiment of the present invention needs to inform the base station controller that the call service involves multiple cells within the range of the base station controller, it carries a representative identifier identifying a set of multiple cells by a call service message, thus enabling the base station controller to perform corresponding call service operations in each cell of the set according to the indication of the representative identifier. Since a representative identifier of a set of multiple cells can identify all cells in a certain range, the mobile switching center may inform the base station controller the cells included within the group call area by as less and short messages as possible, so as to achieve the purpose of saving the A-interface signaling resources between MSC and BSC.

### BRIEF DESCRIPTION OF THE DRAWING(S)

FIG. 1 is a flowchart of a VGCS service message processing method according to a first embodiment of the present invention.

FIG. 2 is a flowchart of a VGCS service message processing method according to a second embodiment of the present invention.

FIG. 3 is a flowchart of a VGCS service message processing method according to a third embodiment of the present invention.

FIG. 4 is a block diagram of a call service message processing system according to an embodiment of the present invention.

### DETAILED DESCRIPTION

The various preferred embodiments of an embodiment of the present invention are further described in details below in connection with the accompanying drawings for further clarifying the purposes, technical schemes and advantages of an embodiment of the present invention.

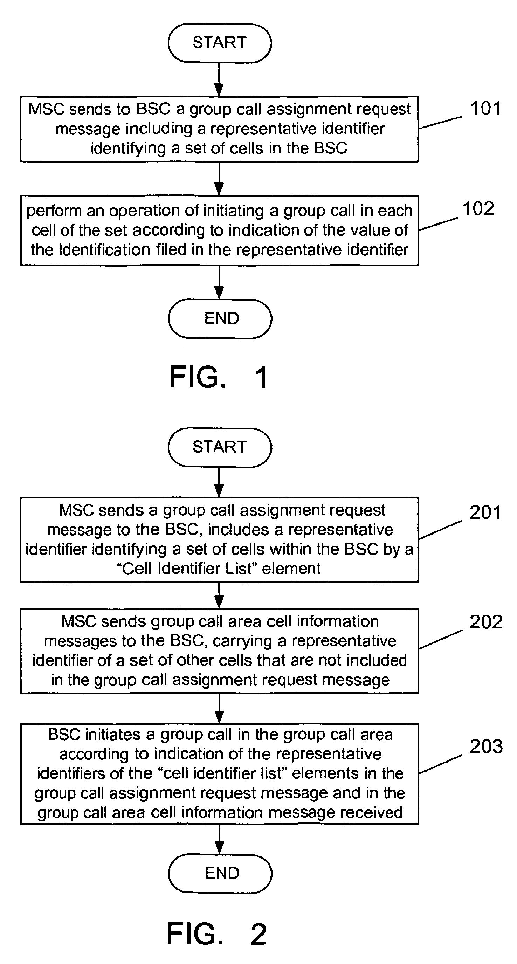

Please refer to FIG. 1, which is a flowchart of a VGCS service message processing method of a first embodiment of an embodiment of the present invention.

Step 101: The MSC sends a VGCS assignment request message to the BSC, including a representative identifier identifying a set of cells in the BSC by a "Cell Identifier List" element. Generally, the representative identifier includes a "Cell Identification Discriminator" filed and an "Identification" field. The "Cell Identification Discriminator" field is a binary code for indicating the code type of the Identification field. An exemplary interpretation of Cell Identification Discriminator field is shown as in Table 1:

**Table 1**

| | |
|---|---|
| 0100 | Location Area Identification (LAI), which is used to identify all cells within a Location Area. |
| 0101 | Location Area Code (LAC), which is used to identify all cells within a location area. |
| 0111 | Mobile Identification, which is used to identify all cells having the same mobile country code and mobile network code. |
| 1011 | Mobile Network Identification (MNI), which is used to identify all cells having the same mobile network code. |
| 1101 | Mobile Country Identification (MCI), which is used to identify all cells having the same mobile country code. |
| 0110 | All cells within the Base Station Subsystem (BSS) are identified. |

It should be noted that the content illustrated in Table 1 is exemplary, and to employ which specific codes for representing a Cell Identification Discriminator is not so limited. It is possible to either follow the code definitions (such as 0100, 0101 and 0110, etc.) in the existing standard criterion, or set consciously by the operator according to the actual requirements. It will be further explained with respect to the exemplary content in Table 1.

When the "Cell Identification Discriminator" filed is 0100, it represents that the code type of the Identification field is Location Area Identification (LAI), that is, the Identification field is LAI (i.e., MCC + MNC + LAC); when the "Cell Identification Discriminator" filed is 0101, it represents that the code type of the Identification field is Location Area Code (LAC), that is, the Identification field is LAC; when the "Cell Identification Discriminator" filed is 0111, it represents that the code type of the Identification field is Mobile Identification, that is, the Identification field is (MCC + MNC); when the "Cell Identification Discriminator" filed is 1011, it represents that the code type of the Identification field is Mobile Network Identification, that is, the Identification field is MNC; when the "Cell Identification Discriminator" filed is 1101, it represents that the code type of the Identification field is Mobile Country Identification, that is, the Identification field is MCC; when the "Cell Identification Discriminator" filed is 0110, it represents that the representative identification has no "Identification" field and identifies all cells within the BSC.

It further describes the Location Area Identification (0100) below in details as an example. Please refer to a "cell identifier list" element shown in Table 2.

**Table 2**

| 8 | 7 | 6 | 5 | 4 | 3 | 2 | 1 |
|---|---|---|---|---|---|---|---|
| Element identifier | | | | | | | |
| Length | | | | | | | |
| Spare | | | | Cell Identification Discriminator: 0100 | | | |
| LAI1: 460 00 0001 0001 | | | | | | | |
| LAI2: 460 00 0001 0010 | | | | | | | |

In this element, the representative identifier identifying a set of cells within the BSC includes a "Cell Identification Discriminator" filed being 0100, and includes the "Identification" fields LAI1 and LAI2. Within the BSC, a set of cells having the same LAI1 (e.g., 460 00 0001 0001) includes n cells corresponding to CI1, CI2, ..., CIn respectively; a set of cells having the same LAI2 (e.g., 460 00 0001 0010) includes k cells corresponding to CI1, CI2, ..., CIk respectively. The codes of LAI1 and LAI2 are (MCC + MNC + LAC) respectively, e.g., they both have MCC being 460 and MNC being 00, and have LACs being 0001 0001 and 0001 0010 respectively.

If the techniques associated with the existing group call assignment message are employed, then the MSC will include n + k CGI by the "cell identifier list" element in the group call assignment message, and each CGI has a length of MCC+MNC+LAC+CI, which is larger than the length of LAI1 and LAI2. Therefore, an embodiment of the present invention identifies the n + k cells within the BSC by two LAIs only, which reduces greatly the length of the VGCS service message from MSC to BSC and reduces the occupancy for the A-interface signaling resources.

Further, since the MCC and MNC of each cell within the BSC are the same, LAC can be used directly to identify some cells within the BSC, thereby further shortening the length of the VGCS service message and reducing the occupancy for the A-interface signaling resources. The corresponding "cell identifier list" element is as shown in Table 3.

**Table 3**

| 8 | 7 | 6 | 5 | 4 | 3 | 2 | 1 |
|---|---|---|---|---|---|---|---|
| Element identifier | | | | | | | |
| Length | | | | | | | |
| Spare | | | Cell Identification Discriminator: 0101 | | | | |
| LAC1: 0001 0001 | | | | | | | |
| LAC2: 0001 0010 | | | | | | | |

The "cell identifier list" elements including the remaining types in Table 1 are similar to the elements in Table 2 and Table 3, and will not be repeated herein for purpose of clarity.

Step 102: After receiving a VGCS assignment request message, the BSC checks which specific cells are included in the set range corresponding to the representative identifier according to the indication of the value of the Identification filed in the representative identifier. Further, the BSC performs an operation of initiating a group call in each cell of the set. For example, as shown in Table 2 and Table 3, a group call is initiated to subscribers in all cells having LAC being 0001 0001 and 0001 0010 within the BSC.

Please refer to FIG. 2, which is a flowchart of a VGCS service message processing method of a second embodiment of an embodiment of the present invention.

Step 201: The MSC sends a VGCS assignment request message to the BSC, includes a representative identifier identifying a set of cells within the BSC by a "Cell Identifier List" element. For example, the element is as shown in Table 4.

**Table 4**

| 8 | 7 | 6 | 5 | 4 | 3 | 2 | 1 |
|---|---|---|---|---|---|---|---|
| Element identifier | | | | | | | |
| Length | | | | | | | |
| Spare | | | Cell Identification Discriminator: 0101 | | | | |
| LAC1: 0001 0001 | | | | | | | |
| ... | | | | | | | |
| LAC17: 0010 0001 | | | | | | | |

In this element, the representative identifier identifying a set of cells within the BSC includes a "Cell Identification Discriminator" filed being 0101, and includes "Identification" fields from LAC1 to LAC17, being 0001 0001, 0001 0010, ...0010 0001 respectively.

Since 17 LACs are included, the length of the VGCS assignment request message is increased thereby. Assuming that the length has reached a threshold provided by the VGCS assignment request message length while there are still 3 LACs (LAC 18, LAC 19 and LAC20) that have not been identified, then forward to step 202.

Step 202: The MSC sends VGCS area cell information messages to the BSC. Such message also has a "cell identifier list" element or a "segmented cell identifier list" element with a similar structure, by which the representative identifier of a set of other cells that are not included in the VGCS assignment request message is carried, as shown in Table 5.

**Table 5**

| 8 | 7 | 6 | 5 | 4 | 3 | 2 | 1 |
|---|---|---|---|---|---|---|---|
| Element identifier | | | | | | | |
| Length | | | | | | | |
| Spare | | | Cell Identification Discriminator: 0101 | | | | |
| LAC18: 0010 0010 | | | | | | | |
| LAC19: 0010 0100 | | | | | | | |
| LAC20: 0010 1000 | | | | | | | |

As compared to the existing VGCS area cell information message, since the "cell identifier list" element of the existing VGCS area cell information message carries CGIs of each cell, it may require multiple VGCS area cell information messages to inform the BSC of the remaining various cell identifiers. While an embodiment of the present invention identifies many cells by the representative identifier of the VGCS area cell information message only. Apparently, it shortens significantly the lengths of the messages sent by the MSC, and reduces the number of messages, thereby enabling more efficient usage of the A-interface resources.

Step 203: BSC checks which specific cells are included in the set range corresponding to the representative identifier according to the indication of the representative identifiers of the "cell identifier list" elements in the VGCS assignment request message and in the VGCS area cell information message received, and further initiates a group call in the group call area specified by LAC1 to LAC20.

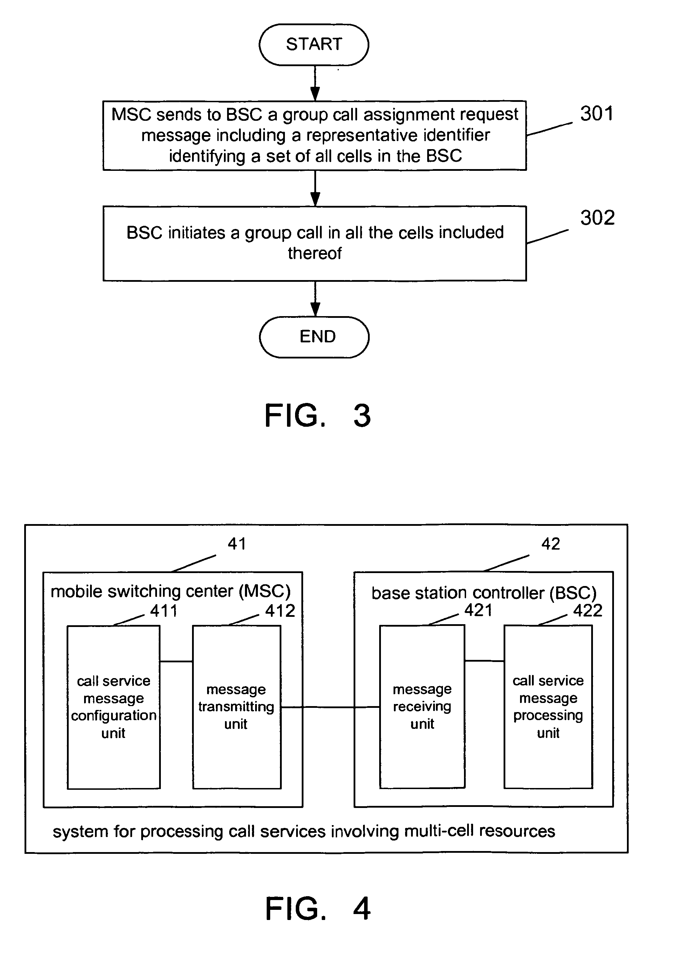

Please refer to FIG. 3, which is a flowchart of a VGCS service message processing method of a third embodiment of an embodiment of the present invention.

Step 301: When the group call area includes all cells within the BSC, then the MSC sends a group call assignment request message to the BSC, wherein the "cell identifier list" element is shown as in Table 6.

**Table 6**

| 8 | 7 | 6 | 5 | 4 | 3 | 2 | 1 |
|---|---|---|---|---|---|---|---|
| Element identifier | | | | | | | |
| Length | | | | | | | |
| Spare | | | Cell Identification Discriminator: 0110 | | | | |

In this element, the representative identifier identifying a set of all cells within the BSC merely includes a "Cell Identification Discriminator" filed with a value of 0100, i.e., identifying all cells within the BSC. Apparently, in the present embodiment, the "Cell Identification Discriminator" element included in the message sent by the MSC has a shorter length, and any group call area cell information message is not required. In the case that group call A-interface links are shared, it significantly saves the A-interface signaling resources.

Step 302: The BSC initiates a group call in all cells within the BSC in accordance with the "Cell Identification Discriminator" filed in the group call assignment request message having a value of 0110.

In the various embodiments above, the group call assignment request messages and the group call area cell information messages in VGCS services are taken as examples for illustration. Those with ordinary skills in the art will readily understand that, other messages in group call service processes associated with the cell set within the group call area may apply the technical schemes of an embodiment of the present invention. In addition, in the case that the group call A-interface links are shared, other call services involving multi-cell service channels may also employ the methods of an embodiment of the present invention to inform the BSC of the multiple cells included thereof that need to perform the corresponding service operations, such as the VBS services similar to the VGCS services. The VBS services and VGCS services are substantially similar in the parts related to the technical schemes of an embodiment of the present invention. For example, a broadcast assignment request message in VBS (VBS ASSIGMENT REQUEST) services has a similar structure as the group assignment request message in VGCS services; and the VBS broadcast area cell information (VBS AREA CELL INFO) message also has a similar structure as the group call area ID cell information message in VGCS services. Of course, other messages in voice broadcast services processes involving cell set within the broadcast area may also apply the technical schemes of an embodiment of the present invention.

Please refer to FIG. 4, which is a block diagram of an embodiment of a call service message processing system disclosed by an embodiment of the present invention. The call service message processing system in this embodiment includes a mobile switching center (MSC) 41 and a base station controller (BSC) 42. The mobile switching center 41 includes a call service message configuration unit 411 and a message transmitting unit 412, and the base station controller 42 includes a message receiving unit 421 and a call service message processing unit 422. It should be noted that, since the call service message processing system shown in this embodiment is the further improvement based on the existing call service message processing systems, only logic units associated with the improved techniques are illustrated in the system block diagram of the embodiment in FIG. 4 and the implements thereof are described in details, while the logical units of an embodiment of the present invention similar to the existing call service message processing systems are not described. The call service in the present embodiment involves service channels of multi-cells, and may be either voice group call service (VGCS) or voice broadcast service (VBS), or other call services involving multi-cells service channels.

Still taking the VGCS service as an example, the internal structure thereof will be illustrated in connection with the operation principles of the system. It should be noted that, since the call service message processing system illustrated in this embodiment belongs to the same inventive concept as the VGCS service message processing methods, some similar concepts (such as the various messages, elements, and representative identifiers, etc.) thereof will not be repeated herein, the above descriptions of which can be referred by those skilled in the art.

After a service subscriber dialed the group ID subscribed, the mobile switching center 41 will configure a group call assignment request message by the call service message configuration unit 411 in accordance with the cell range within the base station controller 42 associated with the group call service. The group call assignment request message includes a representative identifier identifying a set of cells within the BSC 42 by a "Cell Identifier List" element. Generally, the representative identifier includes a "Cell Identification Discriminator" filed and an "Identification" field.

There are various types of representative identifiers, such as for identifying a set of cells within the BSC 42 having the same Location Area Identification; identifying a set of cells within the BSC 42 having the same Location Area Code; identifying a set of cells within the BSC 42 having the same Mobile Country Code and the same Mobile Network Code; and identifying a set of all cells within the BSC 42. The type of a representative identifier is mainly embodied in the content of the "Cell Identification Discriminator" field included thereof, e.g., the content of the "Cell Identification Discriminator" field may be Location Area Identification (LAI = MCC + MNC + LAC), or Location Area Code (LAC), or Mobile Identification (MCC+MNC), or Mobile Network Code (MNC), or Mobile Country Code (MCC). Please refer to the Tables and explanations previously illustrated for the specific content.

After the call service message configuration unit 411 configures the group call assignment request message (possibly further including a group call area cell information message having a similar structure), the message transmitting unit 412 sends the message to the base station controller 42. Further, after the message receiving unit 421 at the base station controller 42 receives the group call assignment request message (or including the group call area cell information message), the call service message processing unit 422 is informed. Thus the call service message processing unit 422 checks which specific cells are included in the set range corresponding to the representative identifier according to the indication of the representative identifier in the message, and further performs the call service operations specified by the message in each cell of the corresponding set.

As can be seen, in the call service message processing system illustrated in the present embodiment, no matter the group call assignment request message or the group call area ID cell information message, the representative identifier included therein can identify all cells within a range. Therefore, as compared to the existing similar messages that include the CGI (MCC+MNC+LAC+CI) of each cell, an embodiment of the present invention reduces tremendously the lengths and number of messages sent by the MSC, thereby saving the A-interface signaling resources between MSC and BSC.

The above embodiments are used to illustrate and explain the embodiment of the present invention.

## Claims

1. A method for processing a call service message, the call service being associated with service channels of multiple cells within a range of a base station controller, wherein the method comprises:
receiving (101, 301), by the base station controller, a call service message sent by a mobile switching center, wherein the call service message comprises a representative identifier identifying a set of cells associated with the call service within the base station controller;
performing (102, 302), by the base station controller, a call service operation specified by the call service message in each cell of the set according to indication of the representative identifier in the call service message, wherein
the representative identifier comprises a cell identification discriminator field and an identification field, wherein content in the cell identification discriminator field represents a type of the identification, and the identification field comprises at least one corresponding identification, and
the type of the representative identifier comprises:
identifying a set of all cells having a same location area identification within the base station controller; or
identifying a set of all cells having a same location area code within the base station controller; or
identifying a set of all cells having a same mobile country code and a same mobile network code within the base station controller; or
identifying a set of all cells within the base station controller.

2. The method of claim 1, wherein
when the representative identifier identifies a set of all cells having a same location area identification within the base station controller, a value in the cell identification discriminator field represents that the type of the identification is a location area identification, and the identification field comprises at least one location area Identification; or
when the representative identifier identifies a set of all cells having a same location area code within the base station controller, a value in the cell identification discriminator field represents that the type of the identification is a location area code, and the identification field comprises at least one location area code; or
when the representative identifier identifies a set of all cells having a same mobile country code and a same mobile network code within the base station controller, a value in the cell identification discriminator field represents that the type of the identification is a mobile identification, and the identification field comprises at least one mobile identification including a mobile country code and a mobile network code.

3. The method of claim 1 or claim 2, wherein the call service is a voice group call service or a voice broadcast service, and wherein
when the call service is a voice group call service, the call service message is a group call assignment request message or a group call area cell information message;
when the call service is a voice broadcast service, the call service message is a broadcast assignment request message or a broadcast area cell information message.

4. The method of claim 1 or claim 2, wherein the call service message carries the representative identifier by a cell identifier list element or a segmented cell identifier list element.

5. A mobile switching center, comprising a call service message configuration unit (411) and a message transmitting unit (412), wherein
the call service message configuration unit (411) is adapted to configure a call service message in accordance with a cell range associated with the call service within a base station controller, the call service is associated with service channels of multiple cells within a range of a base station controller, the call service message comprises a representative identifier identifying a set of cells associated with the call service within the base station controller; and
the message transmitting unit (412) is adapted to send the configured call service message to the base station controller, wherein
the representative identifier comprises a cell identification discriminator field and an identification field, wherein content in the cell identification discriminator field represents a type of the identification, and the identification field comprises at least one corresponding identification, and
the type of the representative identifier comprises:
identifying a set of all cells having a same location area identification within the base station controller; or
identifying a set of all cells having a same location area code within the base station controller; or
identifying a set of all cells having a same mobile country code and a same mobile network code within the base station controller; or
identifying a set of all cells within the base station controller.

6. A base station controller, comprising a message receiving unit (421) and a call service message processing unit (422), wherein
the message receiving unit (421) is adapted to receive a call service message from a mobile switching center, wherein the call service message comprises a representative identifier identifying a set of cells associated with the call service within the base station controller; and
the call service message processing unit (422) is adapted to perform a call service operation specified by the message in each cell of the set according to the indication of the representative identifier in the call service message, and the call service is associated with service channels of multiple cells within a range of a base station controller, wherein
the representative identifier comprises a cell identification discriminator field and an identification field, wherein content in the cell identification discriminator field represents a type of the identification, and the identification field comprises at least one corresponding identification, and
the type of the representative identifier comprises:
identifying a set of all cells having a same location area identification within the base station controller; or
identifying a set of all cells having a same location area code within the base station controller; or
identifying a set of all cells having a same mobile country code and a same mobile network code within the base station controller; or
identifying a set of all cells within the base station controller.

7. A system of processing call service message, wherein the system comprises the mobile switching center (41) of claim 5, and the base station controller (42) of claim 6.

## Patentansprüche

1. Verfahren zum Verarbeiten einer Anrufdienstnachricht, wobei der Anrufdienst mit Dienstkanälen mehrerer Zellen in einer Reichweite einer Basisstationssteuerung assoziiert ist, wobei das Verfahren die folgenden Schritte umfasst:
Empfangen (101, 301) einer durch eine Mobilvermittlungsstelle gesendeten Anrufdienstnachricht durch die Basisstationssteuerung, wobei die Anrufdienstnachricht eine repräsentative Kennung umfasst, die eine Menge von mit dem Anrufdienst in der Basisstationssteuerung assoziierten Zellen identifiziert;
Ausführen (102, 302) einer durch die Anrufdienstnachricht spezifizierten Anrufdienstoperation durch die Basisstationssteuerung in jeder Zelle der Menge gemäß der Indikation der repräsentativen Kennung in der Anrufdienstnachricht,
wobei
die repräsentative Kennung ein Zellenidentifikations-Diskriminatorfeld und ein Identifikationsfeld umfasst, wobei Inhalt in dem Zellenidentifikations-Diskriminatorfeld eine Art der Identifikation repräsentiert und das Identifikationsfeld mindestens eine entsprechende Identifikation umfasst, und
die Art der repräsentativen Kennung Folgendes umfasst:
Identifizieren einer Menge aller Zellen mit einer selben Ortsbereichsidentifikation in der Basisstationssteuerung; oder
Identifizieren einer Menge aller Zellen mit einem selben Ortsbereichscode in der Basisstationssteuerung; oder
Identifizieren einer Menge aller Zellen mit einem selben Mobilländercode und einem selben Mobilnetzcode in der Basisstationssteuerung; oder
Identifizieren einer Menge aller Zellen in der Basisstationssteuerung.

2. Verfahren nach Anspruch 1, wobei,
wenn die repräsentative Kennung eine Menge aller Zellen mit einer selben Ortsbereichsidentifikation in der Basisstationssteuerung identifiziert, ein Wert in dem Zellenidentifikations-Diskriminatorfeld repräsentiert, dass die Art der Identifikation eine Ortsbereichsidentifikation ist, und das Identifikationsfeld mindestens eine Ortsbereichsidentifikation umfasst; oder
wenn die repräsentative Kennung eine Menge aller Zellen mit einem selben Ortsbereichscode in der Basisstationssteuerung identifiziert, ein Wert in dem Zellenidentifikations-Diskriminatorfeld repräsentiert, dass die Art der Identifikation ein Ortsbereichscode ist, und das Identifikationsfeld mindestens einen Ortsbereichscode umfasst; oder
wenn die repräsentative Kennung eine Menge aller Zellen mit einem selben Mobilländercode und einem selben Mobilnetzcode in der Basisstationssteuerung identifiziert, ein Wert in dem Zellenidentifkations-Diskriminatorfeld repräsentiert, dass die Art der Identifikation eine Mobilidentifikation ist, und das Identifikationsfeld mindestens eine Mobilidentifikation einschließlich eines Mobilländercodes und eines Mobilnetzcodes umfasst.

3. Verfahren nach Anspruch 1 oder Anspruch 2, wobei der Anrufdienst ein Sprach-Gruppenanrufdienst oder ein Sprach-Broadcast-Dienst ist und wobei,
wenn der Anrufdienst ein Sprach-Gruppenanrufdienst ist, die Anrufdienstnachricht eine Gruppenanruf-Zuweisungsanforderungsnachricht oder eine Gruppenanruf-Bereichszelleninformationsnachricht ist;
wenn der Anrufdienst ein Sprach-Broadcast-Dienst ist, die Anrufdienstnachricht eine Broadcast-Zuweisungsanforderungsnachricht oder eine Broadcast-Bereichszelleninformationsnachricht ist.

4. Verfahren nach Anspruch 1 oder Anspruch 2, wobei die Anrufdienstnachricht die repräsentative Kennung durch ein Zellenkennungs-Listenelement oder ein segmentiertes Zellenkennungs-Listenelement führt.

5. Mobilvermittlungsstelle, die eine Anrufdienstnachrichten-Konfigurationseinheit (411) und eine Nachrichtensendeeinheit (412) umfasst, wobei die Anrufdienstnachrichten-Konfigurationseinheit (411) dafür ausgelegt ist, eine Anrufdienstnachricht gemäß einer mit dem Anrufdienst in einer Basisstationssteuerung assoziierten Zellenreichweite zu konfigurieren, der Anrufdienst mit Dienstkanälen mehrerer Zellen in einer Reichweite einer Basisstationssteuerung assoziiert ist, die Anrufdienstnachricht eine repräsentative Kennung umfasst, die eine Menge von mit dem Anrufdienst in der Basisstationssteuerung assoziierten Zellen identifiziert; und
die Nachrichtensendeeinheit (412) dafür ausgelegt ist, die konfigurierte Anrufdienstnachricht zu der Basisstationssteuerung zu senden, wobei die repräsentative Kennung ein Zellenidentifikations-Diskriminatorfeld und ein Identifikationsfeld umfasst, wobei Inhalt in dem Zellenidentifikations-Diskriminatorfeld eine Art der Identifikation repräsentiert und das Identifikationsfeld mindestens eine entsprechende Identifikation umfasst, und
die Art der repräsentativen Kennung Folgendes umfasst:
Identifizieren einer Menge aller Zellen mit einer selben Ortsbereichsidentifikation in der Basisstationssteuerung; oder
Identifizieren einer Menge aller Zellen mit einem selben Ortsbereichscode in der Basisstationssteuerung; oder
Identifizieren einer Menge aller Zellen mit einem selben Mobilländercode und einem selben Mobilnetzcode in der Basisstationssteuerung; oder
Identifizieren einer Menge aller Zellen in der Basisstationssteuerung.

6. Basisstationssteuerung, die eine Nachrichtenempfangseinheit (421) und eine Anrufdienstnachrichten-Verarbeitungseinheit (422) umfasst, wobei die Nachrichtenempfangseinheit (421) dafür ausgelegt ist, eine Anrufdienstnachricht von einer Mobilvermittlungsstelle zu empfangen, wobei die Anrufdienstnachricht eine repräsentative Kennung umfasst, die eine Menge von mit dem Anrufdienst in der Basisstationssteuerung assoziierten Zellen identifiziert; und
die Anrufdienstnachrichten-Verarbeitungseinheit (422) dafür ausgelegt ist, eine durch die Nachricht spezifizierte Anrufdienstoperation in jeder Zelle der Menge gemäß der Indikation der repräsentativen Kennung in der Anrufdienstnachricht auszuführen und der Anrufdienst mit Dienstkanälen mehrerer Zellen in einer Reichweite einer Basisstationssteuerung assoziiert ist, wobei
die repräsentative Kennung ein Zellenidentifikations-Diskriminatorfeld und ein Identifikationsfeld umfasst, wobei Inhalt in dem Zellenidentifikations-Diskriminatorfeld eine Art der Identifikation repräsentiert und das Identifikationsfeld mindestens eine entsprechende Identifikation umfasst, und
die Art der repräsentativen Kennung Folgendes umfasst:
Identifizieren einer Menge aller Zellen mit einer selben Ortsbereichsidentifikation in der Basisstationssteuerung; oder
Identifizieren einer Menge aller Zellen mit einem selben Ortsbereichscode in der Basisstationssteuerung; oder
Identifizieren einer Menge aller Zellen mit einem selben Mobilländercode und einem selben Mobilnetzcode in der Basisstationssteuerung; oder
Identifizieren einer Menge aller Zellen in der Basisstationssteuerung.

7. System zur Anrufdienstnachrichtenverarbeitung, wobei das System die Mobilvermittlungsstelle (41) nach Anspruch 5 und die Basisstationssteuerung (42) nach Anspruch 6 umfasst.

## Revendications

1. Procédé de traitement d'un message de service d'appel, le service d'appel étant associé à des canaux de service de cellules multiples à portée d'un contrôleur de station de base, le procédé comprenant :
la réception (101, 301), par le contrôleur de station de base, d'un message de service d'appel envoyé par un centre de commutation de services mobiles, le message de service d'appel comprenant un identifiant représentatif qui identifie un ensemble de cellules associé au service d'appel dans le contrôleur de station de base ;
l'exécution (102, 302), par le contrôleur de station de base, d'une opération de service d'appel spécifiée par le message de service d'appel dans chaque cellule de l'ensemble en fonction de l'indication de l'identifiant représentatif dans le message de service d'appel, dans lequel
l'identifiant représentatif comprend un champ discriminateur d'identification de cellule et un champ d'identification, le contenu du champ discriminateur d'identification de cellule représentant un type de l'identification, et le champ d'identification comprenant au moins une identification correspondante, et
le type de l'identifiant représentatif comprend :
l'identification d'un ensemble de toutes les cellules ayant une même identification d'emplacement dans le contrôleur de station de base ; ou
l'identification d'un ensemble de toutes les cellules ayant un même indicatif d'emplacement dans le contrôleur de station de base ; ou
l'identification d'un ensemble de toutes les cellules ayant un même indicatif national de mobile et un même indicatif de réseau de mobile dans le contrôleur de station de base ; ou
l'identification d'un ensemble de toutes les cellules dans le contrôleur de station de base.

2. Procédé selon la revendication 1, dans lequel
quand l'identifiant représentatif identifie un ensemble de toutes les cellules ayant une même identification d'emplacement dans le contrôleur de station de base, une valeur dans le champ discriminateur d'identification de cellule indique que le type de l'identification est une identification d'emplacement, et le champ d'identification comprend au moins une identification d'emplacement ; ou
quand l'identifiant représentatif identifie un ensemble de toutes les cellules ayant un même indicatif d'emplacement dans le contrôleur de station de base, une valeur dans le champ discriminateur d'identification de cellule indique que le type de l'identification est un indicatif d'emplacement, et le champ d'identification comprend au moins un indicatif d' emplacement ; ou
quand l'identifiant représentatif identifie un ensemble de toutes les cellules ayant un même indicatif national de mobile et un même indicatif de réseau de mobile dans le contrôleur de station de base, une valeur dans le champ discriminateur d'identification de cellule indique que le type de l'identification est une identification de mobile, et le champ d'identification comprend au moins une identification de mobile comportant un indicatif national de mobile et un indicatif de réseau de mobile.

3. Procédé selon la revendication 1 ou la revendication 2, dans lequel le service d'appel est un service d'appel groupé vocal ou un service de diffusion vocal, et dans lequel quand le service d'appel est un service d'appel groupé vocal, le message de service d'appel est un message de requête d'assignation d'appel groupé ou un message d'information de cellule de zone d'appel groupé ;
quand le service d'appel est un service de diffusion vocal, le message de service d'appel est un message de requête d'assignation de diffusion ou un message d'information de cellule de zone de diffusion.

4. Procédé selon la revendication 1 ou la revendication 2, dans lequel le message de service d'appel porte l'identifiant représentatif par un élément de liste d'identifiants de cellules ou un élément de liste d'identifiants de cellules segmentée.

5. Centre de commutation de services mobiles, comprenant une unité de configuration de message de service d'appel (411) et une unité de transmission de message (412), dans lequel
l'unité de configuration de message de service d'appel (411) est adaptée pour configurer un message de service d'appel en fonction d'une portée de cellule associée au service d'appel dans un contrôleur de station de base, le service d'appel étant associé à des canaux de service de cellules multiples à portée d'un contrôleur de station de base, le message de service d'appel comprenant un identifiant représentatif qui identifie un ensemble de cellules associé au service d'appel dans le contrôleur de station de base ; et
l'unité de transmission de message (412) est adaptée pour envoyer le message de service d'appel configuré au contrôleur de station de base, dans lequel l'identifiant représentatif comprend un champ discriminateur d'identification de cellule et un champ d'identification, le contenu du champ discriminateur d'identification de cellule représentant un type de l'identification, et le champ d'identification comprenant au moins une identification correspondante, et
le type de l'identifiant représentatif comprend :
l'identification d'un ensemble de toutes les cellules ayant une même identification d'emplacement dans le contrôleur de station de base ; ou
l'identification d'un ensemble de toutes les cellules ayant un même indicatif d'emplacement dans le contrôleur de station de base ; ou
l'identification d'un ensemble de toutes les cellules ayant un même indicatif national de mobile et un même indicatif de réseau de mobile dans le contrôleur de station de base ; ou
l'identification d'un ensemble de toutes les cellules dans le contrôleur de station de base.

6. Contrôleur de station de base, comprenant une unité de réception de message (421) et une unité de traitement de message de service d'appel (422), dans lequel l'unité de réception de message (421) est adaptée pour recevoir un message de service d'appel d'un centre de commutation de services mobiles, le message de service d'appel comprenant un identifiant représentatif qui identifie un ensemble de cellules associé au service d'appel dans le contrôleur de station de base ; et
l'unité de traitement de message de service d'appel (422) est adaptée pour exécuter une opération de service d'appel spécifiée par le message dans chaque cellule de l'ensemble en fonction de l'indication de l'identifiant représentatif dans le message de service d'appel, et le service d'appel est associé à des canaux de service de cellules multiples à portée d'un contrôleur de station de base, dans lequel l'identifiant représentatif comprend un champ discriminateur d'identification de cellule et un champ d'identification, le contenu du champ discriminateur d'identification de cellule représentant un type de l'identification, et le champ d'identification comprenant au moins une identification correspondante, et
le type de l'identifiant représentatif comprend :
l'identification d'un ensemble de toutes les cellules ayant une même identification d'emplacement dans le contrôleur de station de base ; ou
l'identification d'un ensemble de toutes les cellules ayant un même indicatif d'emplacement dans le contrôleur de station de base ; ou
l'identification d'un ensemble de toutes les cellules ayant un même indicatif national de mobile et un même indicatif de réseau de mobile dans le contrôleur de station de base ; ou
l'identification d'un ensemble de toutes les cellules dans le contrôleur de station de base.

7. Système de traitement d'un message de service d'appel, le système comprenant le centre de commutation de services mobiles (41) de la revendication 5, et le contrôleur de station de base (42) de la revendication 6.
